# EUROPEAN PATENT APPLICATION

(11) **EP 2 056 634 A2**
(43) Date of publication of application: **06.05.2009**
(21) Application number: 08253540.2
(22) Date of filing: 30.10.2008
(51) Int. Cl.: H04W 24/06, H04W 24/04

(54) **System and method for determining end-to-end speech quality of mobile telephone devices**

(30) Priority: 30.10.2007 US 928089
(71) Applicant: Metrico Wireless, Inc., Frederick, MD 21704 (US)
(72) Inventor: Topaltzas, Dimitrios, Frederick, MD 21704 (US); Horner, Jeffrey, Frederick, MD 21704 (US)
(74) Representative: Tunstall, Christopher Stephen

(57) **Abstract**

A system and method for determining the speech quality of a mobile telephone device is provided. In one embodiment the method comprises providing test speech to the telephone device configured to transmit signals representing the first test speech through a mobile telephone network by a first computer; receiving, at a second computer, signals representative of the first test speech via a communication path that includes the mobile telephone network; determining the speech quality for the received signals representing the first test speech; storing data of the first speech quality in memory; and receiving the data of the first speech quality at the first computer. In addition, the method may include retrieving a second test speech from a memory of the second computer; transmitting the second test speech through the mobile telephone network for reception by the mobile telephone device; and determining a speech quality for the second test speech received by the mobile telephone device by the first computer.

## Description

### Field of the Invention

The present invention generally relates to systems and methods for evaluating communication devices, and more particularly to systems and methods for determining the speech quality provided by a mobile telephone device communicating through a mobile telephone network.

### Background of the Invention

Mobile telephone devices have become ubiquitous in our society. Unlike conventional landline telephones, which typically operate in a home, office, or other relatively quiet environment, mobile telephone devices are subjected to use under varying radio environments. One challenge to those designing mobile telephone devices is to design the telephone devices to provide the desired speech quality even when the user is using the telephone device in a poor radio environment. Further, wireless network operators also want users of their network to use telephone devices that provide adequate speech quality in all radio environments to ensure that the user has a satisfactory experience using the wireless network. Thus, there are numerous parties who desire to test the quality of speech provided by a mobile telephone device.

There are, however, a wide variety of telephone devices used for communicating over wireless mobile telephone networks. As used herein, the phrase "telephone devices" and "mobile telephone devices" is meant to include mobile telephones and associated accessory communication devices that operate with a mobile telephone such as, for example, wired and wireless headsets and earpieces that include a microphone or other audio input mechanism. With the proliferation of mobile telephone devices, many designs of telephones and accessories have evolved. The different designs of telephone devices result in different performance characteristics for each telephone device. Various design characteristics may impact the quality of the speech provided by a telephone device and its ability to render speech of sufficient quality in varying radio environments. For example, the radio front-end of the telephone device, which drives, in part, the radiated performance (a devices ability to receive and transmit radio signals) of the device may positively or negatively impact the speech quality in various radio environments. Another factor may be the device's capability to cancel interfering radio signals from wanted radio signals in order to reduce the signal-to-noise ratio and thereby improve speech quality. As a result, the many different mobile telephone devices, including mobile telephones and associated accessories such as headsets and earpieces, have varying performance characteristics due to their design. Thus, different telephone devices operating in the same radio environment provide different speech quality.

One of the challenges of measuring speech quality for telephone devices is to objectively compare the speech quality of the mobile listener and the landline listener in near real time for a field-based tester of such devices. Thus, the present invention provides methods and systems to objectively measure and compare landline listener speech quality and mobile listener speech quality in near real-time for a tester of telephone devices that is located at either the mobile listener end or the landline listener end. These and other advantageous may be provided by one or more embodiments of the present invention.

### Summary of the Invention

The present invention provides a system and method for determining the speech quality of a mobile telephone device. In one embodiment the method comprises providing test speech to the telephone device configured to transmit signals representing the first test speech through a mobile telephone network by a first computer; receiving, at a second computer, signals representative of the first test speech via a communication path that includes the mobile telephone network; determining the speech quality for the received signals representing the first test speech; storing data of the first speech quality in memory; and receiving the data of the first speech quality at the first computer. In addition, the method may include retrieving a second test speech from a memory of the second computer; transmitting the second test speech through the mobile telephone network for reception by the mobile telephone device; and determining a speech quality for the second test speech received by the mobile telephone device by the first computer.

In a first aspect, the present invention provides a method of determining a communication quality of a mobile telephone device configured to communicate via a mobile telephone network, comprising:
transmitting signals representing first test information from the mobile telephone device through the mobile telephone network;
receiving signals representative of the first test information via the mobile telephone network;
determining a communication quality for the received signals; and
transmitting data of the determined communication quality to a computer co-located with the mobile telephone device in substantially real time.

In a second aspect, the present invention provides a method of determining the speech quality of a mobile telephone device configured to communicate via a mobile telephone network, comprising:
retrieving first test speech from memory of a first computer;
providing the first test speech to the mobile telephone device configured to transmit signals representing the first test speech through the mobile telephone network;
receiving, at a second computer, the signals representing the first test speech via a communication path that includes the mobile telephone network;
determining a first speech quality for the received signals representing the first test speech;
storing data of the first speech quality in a memory;
transmitting data of the first speech quality to the first computer; and
receiving the data of the first speech quality at the first computer.

In a third aspect, the present invention provides a method of determining the speech quality of a mobile telephone device configured to communicate via a mobile telephone network, comprising:
retrieving first test speech from a memory;
transmitting signals representing the first test speech through the mobile telephone network to the mobile telephone device;
receiving signals, at the mobile telephone device, representative of the first test speech via a communication path that includes the mobile telephone network; and
determining a speech quality for the received signals.

In a fourth aspect, the present invention provides a method of determining a communication quality provided by a mobile telephone device configured to communicate via a mobile telephone network, comprising:
transmitting signals representing first test information from the mobile telephone device through a mobile telephone network;
receiving signals representative of the first test information via the mobile telephone network at a first computer;
determining a communication quality for the received signals representative of the first test information;
transmitting the data of the determined communication quality of the received signals representative of the first test information to a second computer co-located with the mobile telephone device;
transmitting signals representing second test information through the mobile telephone network to the mobile telephone device;
receiving signals representative of the second test information via the mobile telephone network at the mobile telephone device; and
determining a communication quality for the received signals representative of the second test information.

In a fifth aspect, the present invention provides a method of providing end-to-end communication quality data for a mobile telephone device, comprising:
performing a first communication test to determine the quality of communication from the mobile telephone device to a remote land line device;
storing first test results data, comprising data of the results of the first communication test, on a first computer;
performing a second communication test to determine the quality of communication from the remote land line device to the mobile telephone device;
storing second test results data, comprising data of the results of the second communication test, on a second computer co-located with the mobile telephone device; and
transmitting the first test results data from the first computer to the second computer.

In a sixth aspect of the present invention, there is provided a system for determining a communication quality of a mobile telephone device, comprising:
a first computer configured to provide first test information;
a mobile telephone device configured to communicate via a mobile telephone network and transmit signals representing the first test information through the mobile telephone network;
a second computer configured to receive the signals representative of the first test information from the mobile telephone network and determine a first communication quality for the received signals.

The invention will be better understood by reference to the following detailed description taken in conjunction with the accompanying drawings.

### Brief Description of the Drawings

The invention is further described in the detailed description that follows, by reference to the noted drawings by way of non-limiting illustrative embodiments of the invention, in which like reference numerals represent similar parts throughout the drawings. As should be understood, however, the invention is not limited to the precise arrangements and instrumentalities shown. In the drawings:

Figure 1 is a block diagram of an example field test system for determining speech quality of a mobile telephone device according to an example embodiment of the present invention;

Figure 2 illustrates an example method for determining speech quality of a mobile telephone device communicating through a mobile telephone network, according to an example embodiment of the present invention; and

Figure 3 illustrates another example method for determining speech quality of a mobile telephone device communicating through a mobile telephone network, according to an example embodiment of the present invention.

### Detailed Description of Illustrative Embodiments

In the following description, for purposes of explanation and not limitation, specific details are set forth, such as particular networks, communication systems, computers, terminals, devices, components, techniques, telephone devices, mobile telephones, accessory devices, simulators, ear pieces, headsets, telephone handsets, data and network protocols, software products and systems, operating systems, development interfaces, hardware, etc. in order to provide a thorough understanding of the present invention.

However, it will be apparent to one skilled in the art that the present invention may be practiced in other embodiments that depart from these specific details. Detailed descriptions of well-known networks, communication systems, computers, telephone devices, mobile telephones, accessory devices, simulators, ear pieces, headsets, telephone handsets, terminals, devices, components, techniques, data and network protocols, software products and systems, development interfaces, operating systems, and hardware are omitted so as not to obscure the description of the present invention.

According to an embodiment of the present invention, the speech quality of a mobile telephone device, such as a mobile telephone, is determined. As used herein, "mobile telephone" means a telephone configured to communicate over a mobile telephone network. Other telephone devices include mobile telephone accessories (e.g., a wired or wireless) such as an earpiece, headset, speaker phone (e.g., that includes a microphone and which may be, for example, in an automobile, or other device), or other such device. A mobile telephone, also sometimes commonly referred to as a cell telephone, is a long-range, mobile electronic device used for mobile communications. In addition to providing the standard voice function of a telephone, many mobile telephones may support additional services such as SMS for text messaging, email, packet switching for access to the Internet, and MMS for sending and receiving photos and video. A conventional mobile telephone may wirelessly communicate via a cellular network of base stations (cell sites), which is connected to the public switched telephone network (PSTN). A "mobile telephone device," as used herein, may be configured to include a mobile telephone alone or in combination with a mobile telephone accessory.

As is known in the art, speech quality may be determined by analyzing received speech via suitable algorithms to determine a mean opinion score (MOS). The present invention may be used to determine the speech quality for one or more mobile telephone devices communicating with a landline-listener through a mobile telephone network in real-time or near real-time. In particular, the speech quality of communications received at a mobile telephone device and speech quality of communications transmitted from the mobile telephone device may be determined. The same mobile telephone device may be tested at various locations within a given mobile telephone network to determine how well the device performs in various real-time (or near real-time) field test environments for the given network. Similarly, different mobile telephone devices and different device configurations for a given mobile telephone may be tested at one or more locations within a mobile telephone network to compare how well the devices or device configurations perform. Further, testing may be performed for different mobile telephone devices in different mobile telephone networks to determine and compare how well the mobile telephone devices perform among the different networks.

According to one example embodiment of the present invention, a mobile telephone device may be tested in an end-to-end, substantially real-time field test environment. In particular, test speech may be transmitted from a land-line test device through a mobile telephone network to the mobile telephone device being tested. Test speech also may be transmitted from the mobile telephone device to the land-line test device. For example, a test operator in the field may couple a voice quality test apparatus to the mobile telephone device to process the received test speech and to retrieve and transmit test speech. Further, the voice quality test apparatus may be in communication with another voice quality test apparatus coupled to the land-line device, such as through the internet. Such end to end communication allows for substantially real time field testing and evaluation of a mobile telephone device.

### End-to-End Field Test Environment

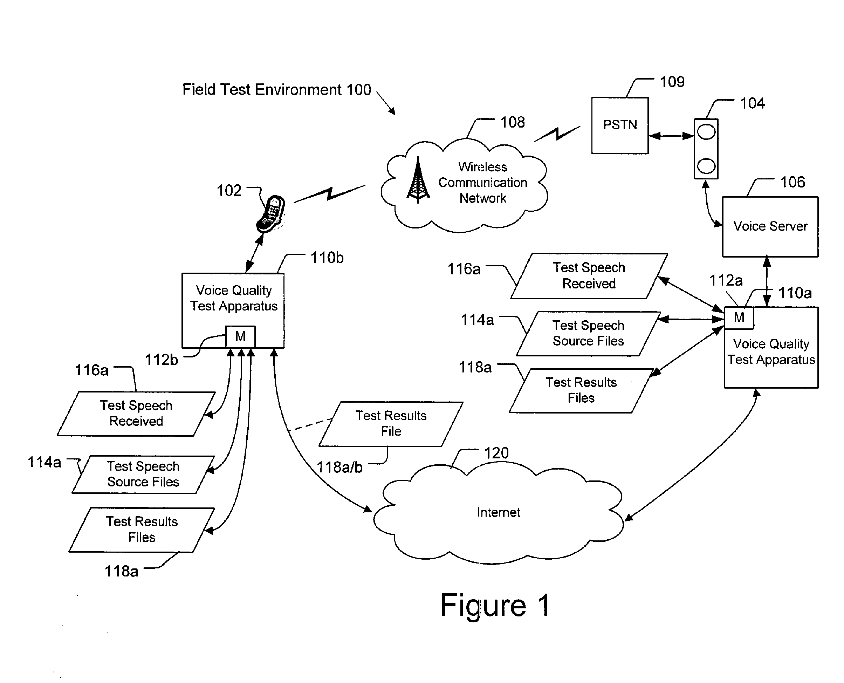

Figure 1 shows an example embodiment of an end-to-end field test environment 100 for measuring speech quality of a mobile telephone device 102. The test environment 100 may include the mobile telephone device 102 being tested, along with test equipment and one or more communication networks. The test equipment may include a land-line device 104, a voice server 106 and one or more voice quality test apparatuses (VQTA) 110. While the land-line device, voice server 106, and VQTA 110a are separate devices in the illustrative description below, in practice they may comprise only one or two separate devices. For example, the PSTN 109 may be connected to the voice server 106 (having a plurality of phone numbers) directly (without a separate telephone acting as landline device 104), which acts as (and has integrated therein) a landline device. Similarly, the voice server 106 may provide the functionality of the VQTA 110a.

Test speech communications may occur between the mobile telephone device 102 and the land-line device 104 via one or more communication networks, including a mobile telephone network 108. By end-to-end field testing, it is meant that test speech may be communicated from the land-line device 104 to the mobile telephone device 102 to determine the speech quality in one direction, and may be communicated from the mobile telephone device 102 to the land-line device 104 to determine the speech quality in the opposite direction. In some embodiments, a data communication path via the internet 120 also may be present, to provide test results to the field personnel, thereby allowing substantially real-time field testing.

At the land-line end of the test environment 100, test speech source files 114a may be present in the memory 112a of the voice quality test apparatus 110a. The voice quality test apparatus 110a may control the voice server 106 to produce (either audibly or electronically) the recorded test speech source file 114a into the land-line device 104. The test speech is then communicated to the mobile telephone device 102. Specifically, signals representing the test speech are transmitted to the mobile communication device 102 through a path that includes, at least in part, the mobile telephone network 108. The mobile telephone network 108 may be a radio network made up of a number of radio cells (or just cells) each served by a fixed transmitter, known as a cell site or base station. These cells are used to cover different areas in order to provide radio coverage over a wider area than the area of one cell. Typically, the mobile telephone network 108 is connected to the public switched telephone network (PSTN) 109. Thus, the path of the signals representing the test speech may comprise a combination of the public switched telephone network 109, the mobile telephone network 108 (such as those based on any of the following telecommunication standards: AMPS, D-AMPS, CDMA2000, GSM, GPRS, EV-DO, UMTS, G1, G1.5, G2, and G3), a broadband communication network, a VoIP network, and/or another wired or wireless network capable of communicating analog voice or digitized voice communications.

At the land-line end, the voice server 106 may include an audio amplifier. The land-line device 104 may be coupled to, or form part of, the voice server 106. The remote voice quality test apparatus 110a may be a computer device, or the like, which is communicatively coupled to the voice server 106. The voice quality test apparatus 110a may include a processor for executing program code and memory 112a for storing program code (e.g., for conducting tests), test speech source files 114a, files of received test speech 116a, and test results files 118a. The voice quality test apparatus 110a may use the same test speech source files 114a for the testing of different mobile telephone devices 102 or of the same device at different times or locations. Using the same test speech source files may provide a degree of standardization to the test procedures and allows test results to be compared meaningfully.

During a test procedure, the test speech source files 114a may be played by an audio player (e.g., software) executed by the voice quality test apparatus 110a to provide audio signals to the voice server 106. The voice server 106 may amplify the received test speech signals, which are audibly produced for reception by the land-line device 104 for communication over the mobile telephone network 108. The voice quality test apparatus 110a may be used to control the amount of amplification provided by the voice server 106. In another embodiment the amplification may be independently controlled by an operator. By controlling the amplification, the volume of the test speech communicated to (or the amplitude of analog signals provided to) the land-line device 104 to the mobile telephone device 102 may be controlled. In an alternative embodiment, the voice server 106 may include an audio player and audibly produce the test speech source file 114 under control of the test quality apparatus 110a. In still another embodiment, the test speech files need not be audibly produced. Instead the test speech source files may be played by an audio player and transmitted onto the PSTN 109 or mobile telephone network 108) directly as an analog or digital signal (if appropriate).

At the mobile telephone device 102 end of the test environment 100, the mobile telephone device 102 may be communicatively coupled to another voice quality test apparatus 110 such as a portable voice quality test apparatus 110b. The test speech received at the mobile telephone device 102 may be communicated as an analog signal to the voice quality test apparatus 110b and converted to a digital format and stored in memory of voice quality test apparatus (VQTA) 110b.

The voice quality test apparatus 110b may be a portable or handheld computing device, or the like (e.g., a laptop computer, notebook computer, or PDA), and include a processor for executing program code and memory 112b for storing test speech source files 114b, received test speech files 116b, and test results 118b. Test speech source files 114 may comprise a database of recorded WAV files. The received test speech files 116a contain the speech communicated, for example, from the land-line device 104 and received at the mobile telephone device 102, as subsequently degraded by the mobile telephone device 102 and the mobile telephone network 108 (and other links in the communication path).

The program code executed by the voice quality test apparatus 110b may include algorithms for performing analysis of received speech to determine the quality of the received speech. The results may be stored as a test results file 118b. For example, the received test speech files 116b may be processed to determine the speech quality according to a standard PESQ scoring (e.g., ITU-T P.862.1 scoring), or another scoring method. The voice quality test apparatus 110b may process received test speech files 116b in the time domain with determination of level, or in the frequency domain with determination of transfer function, distortion factor, rub and buzz, noise, correlation, impulse response, and loudness rating. Measurement parameters may be modified according to a given test procedure. Tolerance schemes may be created, modified, and automatically verified.

The received test speech file 116b and/or the test results file 118b may be transmitted along the data communication path via the internet 120 back to the voice quality test apparatus 110a (or voice server 106) for storage and/or additional processing. It is to be understood that data communication path over the internet 120 may include various communication networks, including wireless communication networks, to carry the data communications between the voice quality test apparatus 110a, 110b.

Testing also may occur for test speech communicated from the mobile telephone device 102 to the land-line device 104. The portable voice quality test apparatus 110b may store test speech source files 114b in its memory 112b. In some embodiments the voice quality test apparatus 110b may include an audio player and an audio output device for audibly producing analog (or digital) signals from the test speech source files 114b. The test speech source file(s) 114b may be produced for reception by the mobile telephone device 102 and communicated to the land-line device 104 via the mobile communication network 108. As discussed previously, the test speech source files 114b may be played by an audio player and provided to the mobile telephone device 102 for transmission over the mobile telephone network 108) directly as an analog or digital signal (if appropriate) without being audibly produced in some embodiments.

The test speech received at the land-line device 104 may be stored in the memory 112a of the voice quality test apparatus 110a as a received test speech file 116a. The received test speech file 116a contains the speech communicated, for example, from the mobile telephone device 102 to the land-line device 104, and as degraded by the mobile telephone device 102 and mobile telephone network 108 (and other elements of the communication path).

The received test speech file 116a may be processed to determine the test results 118a. As with the voice quality test apparatus 110b, the voice quality test apparatus 110a may execute program code including algorithms for performing analysis of received speech to determine the speech quality. For example, the received speech files 116a may be processed to determine the speech quality according to a standard PESQ scoring (e.g., ITU-T P.862.1 scoring), or another scoring method. The voice quality test apparatus 110a may process received test speech files 116a in the time domain with determination of level, or in the frequency domain with determination of transfer function, distortion factor, rub and buzz, noise, correlation, impulse response, and loudness rating. Measurement parameters may be modified according to a given test procedure. Tolerance schemes may be created, modified, and automatically verified.

The test results file 118a may be transmitted along the data communication path via the internet 120 back to the portable voice quality test apparatus 110b. This is a significant function providing substantially real-time feedback of test speech quality to a field operator conducting the test. In particular, the field operator may obtain substantially real time results for testing in both directions (i.e., from the land-line device 104 to mobile telephone device 102 and from the mobile telephone device 102 to land line device 104).

The program code executed by each voice quality test apparatus 110a,b also may include one or more code segments for implementing and controlling test procedures. Further each voice quality test apparatus 110a,b may include software and hardware configured to implement features for efficient and effective measurement, system control, calibration, signal generation, recording, analysis, and data archival. In addition, the test speech source files may be the same for testing in each direction or, in other embodiments, may be different files of test speech.

### Speech Quality Test Methods

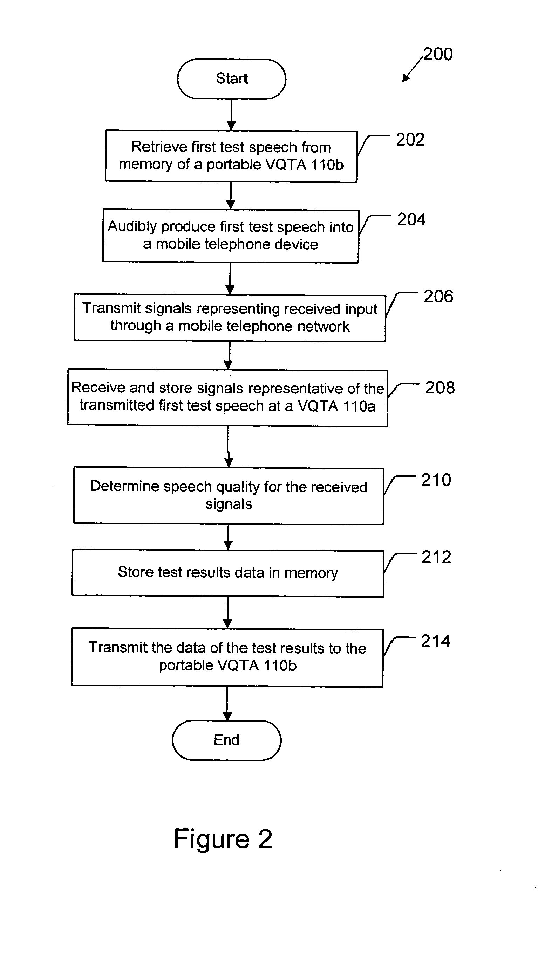

Figure 2 illustrates an example process 200 for determining the speech quality provided by a mobile telephone device 102 according to an example embodiment of the invention. For process 200 first test speech is communicated from the mobile telephone device 102 to the land-line device 104. The land-line device 104 may be at a fixed location, such as at a test center, and be coupled to a mobile telephone network 108 via the PSTN 109. A voice server 106 and voice quality test apparatus (VQTA) 110a also are communicatively coupled to the land-line device 104 to control the test process at the land-line end. Prior to beginning the test process 200, a field operator will take the mobile telephone device 102 to be tested into the field. The specific field location may be selected to test the performance of the mobile telephone device 102 for a specific mobile telephone network 108 or a given cell or location within the specific mobile telephone network 108 or cell.

To begin a test procedure the field operator may use the mobile telephone 102 to call into the test center to establish a communication link between the mobile telephone device 102 and the landline device 104 and/or voice server 106. Although a test procedure may include sending test speech from the land-line device 104 to the mobile telephone device 102, or vice versa, process 200 describes to test speech that is transmitted from the mobile telephone device 102 to the land-line device 104. At step 202, the portable voice quality test apparatus 110b retrieves a test speech source file 114b from memory 112b. At step 204 an audio player program executed by the portable voice quality test apparatus 110b audibly produces the test speech source file 114b into the mobile telephone device 102. At step 206 the mobile telephone device 102 transmits signals representing the received input of test speech via the mobile telephone network 108. In particular the mobile telephone device 102 is located in the field and will communicate as any conventional mobile telephone device, such as by accessing a cell of the network 108. The signals representing the input of first test speech propagate through the mobile telephone network 108 and onto the PSTN 109 to be received at the land-line device 104.

At step 208, the signals representative of the first test speech (as degraded or otherwise altered along the communication path) are received and stored at the landline end of the test environment 100. Specifically, the signals may be converted into digital format and stored in memory 112a as a file of received test speech 116a. The VQTA 110a (or voice server 106) may insert a time and date stamp to the file 116, along with information of the telephone numbers of both the mobile telephone device 102 establishing the telephone call (e.g., based on a conventional caller ID feature) and the land-line device 104 called by telephone device 102. Storing the received speech (and results file) along with information of the calling number, called number, time, and date allows for easy retrieval of such data for transmitting to the field operator. At step 210 the voice quality test apparatus 110a processes the received test speech file 116a to determine the speech quality of the first test speech as received at the land-line device 104. The test results may be stored in memory 112a as a test results file 118a along with information of the calling number (i.e., the telephone number of the mobile telephone device 102), the called number (i.e., of the landline device 108), the time, and the date. Information of the location of the mobile telephone 102 may be included in the file (e.g., transmitted as a header on the test speech file) as determined by a GPS module in the VQTA 110b or the mobile telephone device 102.

In some embodiments the portable voice quality test apparatus 110b located in the field also may be communicatively linked to the internet. For example, the portable voice quality test apparatus 110b may comprise a portable computer having a broadband wireless modem. In some embodiments, the mobile telephone device 102 also may serve as a device for coupling the voice quality test apparatus 110b to the internet 120. The voice quality test apparatus 110a located at the test center also may be connected to the internet. At step 214, the voice quality test apparatus 110a transmits the test results file 118a via the internet to the portable voice quality test apparatus 110b, including the time and data stamp and the device phone numbers. Additionally, the test results file 118a may include location information.

In one embodiment, the field operator may log onto a web site of the test center and retrieve the appropriate test results file 118 (e.g., from the voice server 106) by reviewing the time and date stamp and/or the telephone number associated with each test results file 118 (to identify the results file(s) associated with the telephone device 102 that was tested). Thus, the field operator may simply download the appropriate file 118. In another embodiment, the voice quality test apparatus 110a (or server 106) may identify the portable voice quality test apparatus 110b associated with the telephone number of the telephone device 102 (and associated with the results file) and retrieve from memory an internet address or email address (or other destination information) for transmitting the test results 118a. Such results may be transmitted (e.g., emailed, SMS, etc.) immediately after scoring of received test speech or in response to a received request.

Once the test results are received by the field operator, the results may be displayed for viewing. As a result, substantially real time evaluation of the test speech quality may be achieved. The field operator may then conduct additional tests for other mobile telephone devices or device configurations at the same field location. Alternatively, or in addition, the field operator may relocate to another field location and perform additional tests for the same mobile telephone device(s). Results may be achieved for many locations in a given mobile telephone network 108, and for different mobile telephone networks 108. Testing may be repeated at other times in the same field locations under different weather conditions and different network load conditions to provide additional test results.

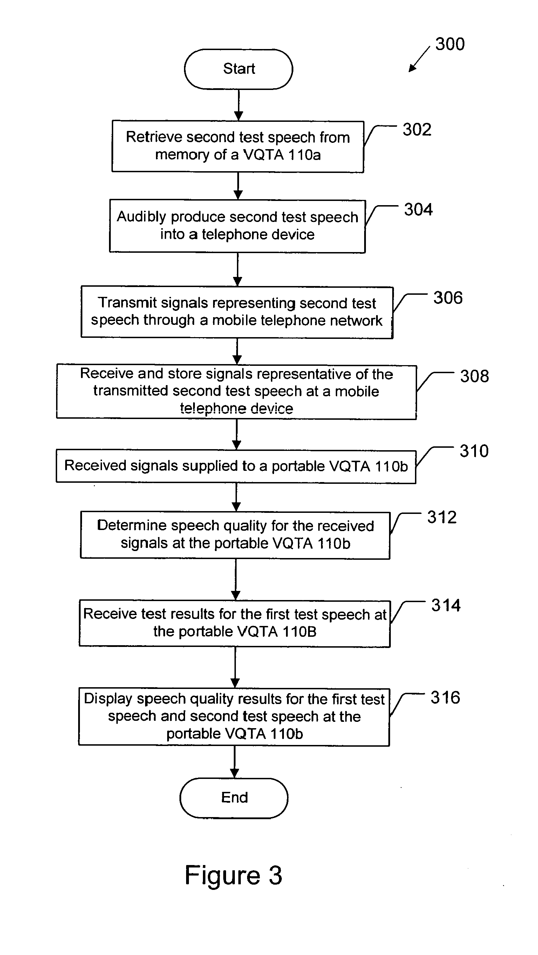

Figure 3 illustrates an example process 300 for determining the speech quality provided by a mobile telephone device 102, which may be implemented instead of, in addition to, or concurrently with, process 200 of Figure 2. In this process the test speech is communicated from the land-line device 104 to the mobile telephone device 102. The land-line device 104 may be at a fixed location, such as at the test center, and be coupled to the mobile telephone network 108 via the PSTN 109. Prior to beginning the test process 300, the field operator may take the mobile telephone device 102 to be tested into the field. The specific field location may be selected to test the performance of the mobile telephone device 102 for a specific mobile telephone network 108 or a given cell or location within the specific mobile telephone network 108 or cell. The location of the mobile telephone 102 may also be recorded and stored in the VQTA 110a.

To begin a test procedure the field operator may use the mobile telephone device 102 to call into the test center to command or otherwise request that a test procedure be performed and to establish a communication link with the landline device 104 and/or voice server 106. At step 302, (and in response to the request or command) the voice quality test apparatus 110a retrieves a test speech source file 114a from memory 112a. The voice quality test apparatus 110a may send the test speech source file to the voice server 106. At step 304 the voice server 106 audibly produces the test speech source file 114a into the land-line device 104 (e.g., as second test speech). At step 306, the land-line device 104 transmits signals representative of the second test speech to the PSTN 109. The PSTN 109 communicates the signals to the mobile telephone network 108 serving the mobile telephone device 102. In an alternative embodiment the voice server 106 may omit the step of creating an audio signal to be audibly received by the land-line device 104. Instead the voice server at step 306 may directly communicate a digital or analog electrical signals representative of the second test speech onto the mobile telephone network 108, the PSTN 109 or another communication network capable of communicating with the mobile telephone network 108.

The signals representing the second test speech propagate through the mobile telephone network 108 to be received by the mobile telephone device 102 at step 308. The signals received at the mobile telephone device 102 are supplied to the VQTA 110b. Specifically, at step 310 the portable voice quality test apparatus 110b receives the signals representative of the second test speech (as degraded or otherwise altered along the communication path and mobile telephone device 102). The received signals may be converted into digital format and stored in memory 112b as a received test speech file 116b. The voice quality test apparatus 110b may insert a time and date stamp to the file 116, along with an indication of the telephone numbers of both the mobile telephone device 102 and the land-line device 104 and (in some instances) information of the location of the mobile device 102. At step 312 the portable voice quality test apparatus 110b processes the received test speech file 116 to determine the speech quality of the second test speech and display the results. The speech quality results may be stored in memory 112b as a test results file 118b.

A field operator may combine the processes 200, 300 to perform end-to-end substantially real time testing of mobile telephone device communications in both directions sequentially or concurrently. As indicated above with regard to process 200, the field operator may download the first test speech test results, or otherwise receive the results from the test center. For example, at step 314 of process 300, the test results for the first test speech may be received at the portable voice quality test apparatus 110b. At step 316, both the first speech test results and the second speech test results may be displayed and compared. Accordingly, substantially real time results of the first and second test speech quality may be determined.

The field operator may conduct additional tests for other mobile telephone devices or other device configurations at the same field location. Alternatively, or in addition, the field operator may relocate to another field location and perform additional tests for the same mobile telephone device(s). Results may be achieved for many locations in a given mobile telephone network 108, and for different mobile telephone networks 108. Testing may be repeated at other times in the same field locations under different weather conditions and different network load conditions to provide additional test results.

While the above example has been described as testing the speech quality provided by a telephone, the present invention may also be applicable for testing data communications of a device and determine bit error rates, throughput, connectivity, and other not just data quality parameters. Receiving test results in substantially real-time comprises receiving the test results within five minutes, more preferably within three minutes, even more preferably within sixty seconds, and yet more preferably with third seconds of the determination of the final test results.

An example VQTA 110 that may be used in some embodiments of the present invention is described in U.S. Pat. No 6,330,428, which is hereby incorporated by reference in its entirety.

It is to be understood that the foregoing illustrative embodiments have been provided merely for the purpose of explanation and are in no way to be construed as limiting of the invention. Words used herein are words of description and illustration, rather than words of limitation. In addition, the advantages and objectives described herein may not be realized by each and every embodiment practicing the present invention. Further, although the invention has been described herein with reference to particular structure, steps and/or embodiments, the invention is not intended to be limited to the particulars disclosed herein. Rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention.

## Claims

1. A method of determining a communication quality of a mobile telephone device configured to communicate via a mobile telephone network, comprising:
transmitting signals representing first test information from the mobile telephone device through the mobile telephone network;
receiving signals representative of the first test information via the mobile telephone network;
determining a first communication quality for the received signals; and
transmitting data of the determined first communication quality to a computer co-located with the mobile telephone device.

2. The method according to claim 1, further comprising:
transmitting signals representing second test information through the mobile telephone network to the mobile telephone device;
receiving, at the mobile telephone device, the signals representative of the second test information via the mobile telephone network; and
determining a second communication quality for the received signals representative of the second test information.

3. The method of claim 1 or claim 2, further comprising providing the signals representing first test information from a first computer.

4. The method according to claim 3 when dependent on claim 2, wherein said determining a second communication quality for the second test information is performed by the first computer.

5. The method of any one of the preceding claims, further comprising the step of storing data of the first communication quality in a memory.

6. The method according to claim 5, wherein said storing data of the first communication quality comprises storing information of the first communication quality in association with a telephone number of the mobile telephone device.

7. The method according to claim 5 or claim 6, wherein said storing comprises storing information of the location of the mobile telephone device.

8. The method of any one of the preceding claims, wherein, prior to the step of transmitting signals representing the first test information, the method comprises:
retrieving first test speech from memory of a first computer; and
providing the first test speech to the mobile telephone device which is configured to transmit the signals representing the first test speech as first test information through the mobile telephone network,
wherein the determined first communication quality represents speech quality.

9. The method according to claim 8, wherein said providing comprises audibly producing.

10. The method according to any one of the preceding claims, wherein said transmitting the data of the determined first communication quality comprises transmitting the data of the first communication quality in substantially real time.

11. The method according to claim 3, wherein said transmitting the data of the first communication quality is performed in response to a request from the first computer.

12. The method according to claim 11, wherein the communication quality comprise at least one of throughput, connectivity, and error rate.

13. The method according to any one of the preceding claims, further comprising:
storing in a memory a plurality of files comprising data of a determined communication quality for different mobile telephone devices; and
identifying one of the plurality of files for transmitting by determining correspondence of a telephone number associated with the one file with a telephone number of the mobile telephone device.

14. A method of determining the speech quality of a mobile telephone device configured to communicate via a mobile telephone network, comprising:
a first computer storing first test speech in a memory thereof and configured to provide the first test speech to the mobile telephone device to transmit signals representing the first test speech through the mobile telephone network;
a second computer configured to receive the signals representing the first test speech via a communication path that includes the mobile telephone network; and
said second computer configured to determine a first speech quality for the received signals representing the first test speech and to transmit data of the first speech quality to the first computer.

15. The system according to claim 14,
wherein the second computer is configured to transmit signals representing second test information through the mobile telephone network to the mobile telephone device,
wherein the first computer is configured to determine a second communication quality for the received signals representative of the second test information.
